# EUROPEAN PATENT SPECIFICATION

(11) **EP 1 796 041 B1**
(45) Date of publication and mention of the grant of the patent: **25.02.2009**
(21) Application number: 06025574.2
(22) Date of filing: 11.12.2006
(51) Int. Cl.: G06T 7/20

(54) **Image processing method, image processing device, image display apparatus, and program, a user terminal, and a program storage device**
Bildverarbeitungsverfahren, Bildverarbeitungsvorrichtung, Bildanzeigevorrichtung und Programm, Benutzerendgerät und Programmspeichervorrichtung
Procédé de traitement d'images, dispositif de traitement d'images, appareil d'affichage d'images et programme, terminal utilisateur et dispositif de stockage de programme

(30) Priority: 12.12.2005 JP 2005357274
(43) Date of publication of application: 13.06.2007
(73) Proprietor: Seiko Epson Corporation, Shinjuku-ku, Tokyo 163-0811 (JP)
(72) Inventor: Ikegami, Tomio c/o Seiko Epson Corporation, Nagano-ken 392-8502 (JP)
(74) Representative: HOFFMANN EITLE

(56) References cited:
- EP-A- 1 051 040
- US-A1- 6 081 209
- FENG J ET AL: "ADAPTIVE BLOCK MATCHING MOTION ESTIMATION ALGORITHM FOR VIDEO CODING" ELECTRONICS LETTERS, IEE STEVENAGE, GB, vol. 31, no. 18, 31 August 1995 (1995-08-31), pages 1542-1543, XP000530941 ISSN: 0013-5194
- BAILO G ET AL: "Search window size decision for motion estimation algorithm in H.264 video coder" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 1453-1456, XP010786026 ISBN: 0-7803-8554-3
- HWANG-SEOK OH ET AL: "A NEW BLOCK-MATCHING ALGORITHM BASED ON AN ADAPTIVE SEARCH AREA ADJUSTMENT USING SPATIO-TEMPORAL CORRELATION" IEEE TRANSACTIONS ON CONSUMER ELECTRONICS, IEEE SERVICE CENTER, NEW YORK, NY, US, vol. 45, no. 3, August 1999 (1999-08), pages 745-752, XP011083796 ISSN: 0098-3063
- YEN-KUANG CHEN ET AL: "Frame-rate up-conversion using transmitted true motion vectors" MULTIMEDIA SIGNAL PROCESSING, 1998 IEEE SECOND WORKSHOP ON REDONDO BEACH, CA, USA 7-9 DEC. 1998, PISCATAWAY, NJ, USA,IEEE, US, 7 December 1998 (1998-12-07), pages 622-627, XP010318331 ISBN: 0-7803-4919-9

## Description

### BACKGROUND

### 1. Technical Field

The invention relates to a technology of generating an interpolation image for compensating for a motion of an image between neighboring frames.

### 2. Related Art

An interpolation image is generated to interpolate, for example, frames. In the frame interpolation, an interpolation image is inserted between adjacent frames in an image. Therefore, in order to improve image display quality by interpolating frames, it is necessary to generate the interpolation image matched with a motion in the image between adjacent frames. For this reason, a technology for generating interpolation images using motion vectors detected from a plurality of blocks obtained by dividing a frame when the interpolation image is generated for frame interpolation has been proposed. A key point of this technology is whether or not appropriate motion vectors can be detected with a sufficiently high probability.

Generally, images are compared using a so called block matching method in order to detect the motion vector. In the block matching method, an area having the same size and shape as those of a target block is searched for among adjacent frames. An image of an area defined by the search is compared with an image of the target block. In this case, a plurality of areas are defined as a result of the search, and the comparison is performed for each defined area. Therefore, if a search range is set to all frames, the number of comparisons (i.e., a computation amount) increases, and the frame interpolation may be unrealistic from the viewpoint of real-time processing according to the frame rate of the image.

An adaptive block matching algorithm is described in FENG J ET AL: "ADAPTIVE BLOCK MATCHING MOTION ESTIMATION ALGORITHM FOR VIDEO CODING" ELECTRONICS LETTERS, IEE STEVENAGE, GB, vol. 31, no. 18, 31 August 1995, pages 1542-1543, XP 000530941.

A technique of limiting the number of comparisons has been proposed by E.B.Bellers, G.deHaan, et al. In a paper entitled "De-interlacing: A Key Technology for Scan Rate Conversion)", Netherlands, ELSEVIER, September 2000, p. 111-115. In this related art, it is conceivable to provide a method of limiting the search range on the basis of motion vectors of the blocks spatially and temporally adjacent to a target block. The spatially adjacent blocks include blocks adjacent to the target block in the same frame as that of the target block. The temporally adjacent block includes blocks adjacent to the target block and a block positioned in the same location as that of the target block in a frame adjacent to the frame having the target block. Hereinafter, both the temporally adjacent block and the spatially adjacent block are commonly called "adjacent block".

There is little difference between a motion vector detected by this method and the motion vector of the adjacent block (i.e., the motion vectors are temporally and spatially continuous). In a general image, since appropriate motion vectors are seldom significantly different between a block and adjacent blocks, a number of appropriate motion vectors are temporally and spatially continuous. Therefore, according to the aforementioned related art, the motion vector can be detected with high accuracy.

However, in the aforementioned technique, motion vector detection accuracy is not sufficiently high. For example, if the frame interpolation is performed for a tennis ball image, which may be obtained by taking pictures of a ball moving across a tennis court with high velocity from above, a still image of a tennis court occupies a lot of block groups within a frame, and a block group surrounded by other block groups may be occupied by an image of the high-velocity ball. When a motion vector of a block corresponding to an image of the ball, adjacent to the block of the tennis court, is detected, its search range is limited by the motion vector already detected for the block of the tennis court. While the size of an appropriate motion vector of the block of the tennis court is zero, the size of an appropriate motion vector of the block of the ball is significantly large. Therefore, the appropriate motion vector may possibly not be detected by performing the search within a limited search range. When an inappropriate motion vector is detected, a search range of the next block is limited, so that detection accuracy of the motion vector of the next block is also degraded.

### SUMMARY

Accordingly, an advantage of some aspects of the invention is to provide an image processing method, an image processing device, a display device, a program, a user terminal and a program storage device with which the motion vector can be detected with sufficiently high accuracy using a realistic computation amount.
According to an aspect of the invention, there is provided an image processing method which generates an interpolation image for compensating for motion of an object in an image between adjacent frames, the image processing method comprising: detecting a motion vector of a detection target block on the basis of a comparison result obtained by dividing a frame into a plurality of blocks and comparing an image of each block with an image included in a search range of an adjacent frame; and generating the interpolation image on the basis of the detected motion vector, wherein in the detection of the motion vector, a first process having a wide search range or a second process having a narrow search range is selectively performed for each block, and wherein the search range of a block where the second process is performed is defined on the basis of the motion vector that has already been detected from the adjacent block. According to the image processing method, the detection may be performed such that it is determined whether or not detection accuracy satisfies a reference level on the basis of the comparison result that can be obtained in a corresponding detection when a motion vector of the block where the second process is performed is detected, and the first process is selected to detect the motion vector of the target block when the detection accuracy does not satisfy the reference level. The frame is a unit of an image, and the image is structured by arranging a plurality of frames along a time axis. As a result, the number of blocks where the inappropriate motion vectors are successively detected can be reduced to zero due to the second process. Therefore, it is possible to safely detect the motion vector with higher accuracy. Since the block where the first process is performed to detect the motion vector is limited to a block that the motion vector detection accuracy obtained through the second process cannot satisfy a reference level, it is possible to detect the motion vector with a realistic computation load, and it is possible to prevent a problem that the wide area search having a wider search range is performed for the block where the appropriate motion vector can be detected even through the limited search having a narrower search range. In addition, a method of determining , whether or not the motion vector detection accuracy satisfies a reference level may be performed such that the detection accuracy is evaluated by directly using or modifying the comparison result that can be obtained when the motion vector is detected, and the result of the evaluation is compared with a reference value;
According to the image processing method, since the search range for the block where the second process is performed is defined on the basis of the motion vector that has already been detected from an adjacent block, it is possible to readily detect the appropriate motion vector which is temporally and spatially continuous in comparison with a case in which the search range is not defined as described above. In addition, since the first process having a wide search range and the second process having a narrow search range are selectively performed for each block, and a block where the first process is performed has a wider search range in comparison with a block where the second process is performed in order to detect the motion vector, it is possible to readily detect an appropriate motion vector which is temporally and spatially discontinuous in comparison with a case in which the second process is performed for all blocks to detect the motion vector. In addition, according to the image processing method, since the search range for a block where the second process is performed is defined on the basis of the motion vector that has already been detected from an adjacent block, it is possible to detect the motion vector on the basis of the motion vector detected with sufficiently high accuracy. Accordingly, according to the image processing method, it is possible to safely detect the motion vector with sufficiently high accuracy. Therefore, it is possible to significantly increase the motion vector detection accuracy when the adjacent block includes a temporally adjacent block.
According to the image processing method, the image of the target block is compared with the image included in the search range when the motion vector of a certain block is detected. The number of comparisons increases as the search range is widened, while the number of comparisons is reduced as the search range is reduced. Basically, since a single process is selected for a single block, the number of comparisons required when the interpolation image is generated is reduced in comparison with a case in which the motion vector is detected through the first process for all blocks. Therefore, it is possible to detect the motion vector with a realistic computation load.

According to the image processing method, the detection may be performed such that it is determined whether or not a detection target block corresponds to a particular block, and the first process is selected for the target block if the detection target block corresponds to the particular block. For example, the first process may be periodically selected. More specifically, the first process may be selected for each predetermined number of blocks. As a result, the number of blocks where an inappropriate motion vector is continuously detected can be limited within a predetermined number due to the second process. For example, the image processing method may further include steps of: generating a difference image representing a difference of gradation values in each pixel between images of the adjacent frames; and defining the particular block on the basis of the difference image. As a result, it is possible to prevent a problem that the first process having a wider search range is selected for the block where the appropriate motion vector can be detected even through the second process having a narrower search range. Furthermore, the number of the particular blocks may be determined such that a processing from the generation of the difference image to the generation of the interpolation image can be performed within a predetermined time limit. The predetermined time limit is a time period the frame interpolation can be performed in a real-timely manner. Moreover, a particular block may be selected according to a certain priority.

In the detection of the motion vector, it is determined whether or not detection accuracy satisfies a reference level on the basis of the comparison result that can be obtained in a corresponding detection when a motion vector of the block where the second process is performed is detected, and the first process is selected to detect the motion vector of the target block when the detection accuracy does not satisfy the reference level. As a result, the number of blocks where the inappropriate motion vectors are successively detected can be reduced to zero due to the second process. Therefore, it is possible to safely detect the motion vector with higher accuracy. Since the block where the first process is performed to detect the motion vector is limited to a block that the motion vector detection accuracy obtained through the second process cannot satisfy a reference level, it is possible to detect the motion vector with a realistic computation load, and it is possible to prevent a problem that the wide area search having a wider search range is performed for the block where the appropriate motion vector can be detected even through the limited search having a narrower search range. In addition, a method of determining whether or not the motion vector detection accuracy satisfies a reference level may be performed such that the detection accuracy is evaluated by directly using or modifying the comparison result that can be obtained when the motion vector is detected, and the result of the evaluation is compared with a reference value.

Generally, in a system which performs a wide search range process without performing a narrow search range process, the search range smaller than that of the entire frame is adopted. Therefore, it is necessary to define a location of the search range. Typically, a location corresponding to the block where the motion vector is required is adopted as the location. In one of the embodiments, the location of the search range of the first process may be defined as described above. In this case, the first process is not a process for detecting the motion vector which is spatially continuous. Also, in the detection, the search range may be defined on the basis of the motion vector that has already been detected from an adjacent block in the same frame as that of the target block when the motion vector is detected from second and subsequent blocks through the first process. As a result, it is possible to detect the motion vector which is spatially continuous even through the first process for the second and subsequent blocks. Since a quite number of appropriate motion vectors correspond to the motion vector which is spatially continuous, it is possible to safely detect the motion vector with higher accuracy.

Also, according to another aspect of the invention, there is provided an image processing device which generates an interpolation image for compensating for the motion of an object in an image between adjacent frames, the image processing device comprising: a detection circuit which detects a motion vector of a detection target block on the basis of a comparison result obtained by dividing a frame into a plurality of blocks and comparing an image of each block with an image included in a search range of an adjacent frame; and a generating circuit which generates the interpolation image on the basis of the motion vector detected by the detection circuit, wherein the detection circuit selectively uses a first process having a wide search range and a second process having a narrow search range for each block as a motion vector detection process, and defines the search range of a block where the second process is performed on the basis of the motion vector that has already been detected from the adjacent block, wherein in the detection of the motion vector, it is determined whether or not detection accuracy satisfies a reference level on the basis of the comparison result that can be obtained in a corresponding detection when a motion vector of the block where the second process is performed is detected and the first process is selected to detect the motion vector of the detection target block when the detection accuracy does not satisfy the reference level.
According to the image processing device, the search range for the block where the second process is performed is defined on the basis of the motion vector that has already been detected for an adjacent block. Therefore, it is possible to readily detect an appropriate motion vector which is temporally and spatially continuous in comparison with a case in which the search range is not defined as described above. In addition, since the first process having a wide search range and the second process having a narrow search range are selectively performed for each block, and a block where the first process is performed has a wider search range in comparison with a block where the second process is performed in order to detect the motion vector, it is possible to readily detect an appropriate motion vector which is temporally and spatially discontinuous in comparison with a case in which the second process is performed for all blocks to detect the motion vector. In addition, according to the image processing device, since the search range for a block where the second process is performed is defined on the basis of the motion vector that has already been detected from an adjacent block, it is possible to detect the motion vector with sufficiently high accuracy. Accordingly, according to the image processing method, it is possible to safely detect the motion vector with sufficiently high accuracy.
According to the image processing device, the image of the target block is compared with the image included in the search range when the motion vector of a certain block is detected. The number of comparisons increases as the search range is widened, while the number of comparisons is reduced as the search range is reduced. In other words, the number of comparisons is increased when the motion vector is detected for the block where the first process is performed, and the number of comparisons is reduced when the motion vector is detected for the block where the second process is performed. Since a single process is selected for a single block, the number of comparisons required when the interpolation image is generated is reduced in comparison with a case in which the motion vector is detected through the first process for all blocks. Therefore, it is possible to detect the motion vector with a realistic computation load.

Also, according to still another aspect of the invention, there is provided an image display apparatus comprising: the image processing device according to claim 6; and an electro-optic device in which a plurality of electro-optic components having a light-emitting property or a light-transmitting property changed by received electric energy are arranged in a sheet shape, wherein the interpolation image is displayed such that the light-emitting property or the light-transmitting property of a plurality of the electro-optic components is changed depending on the interpolation image generated by the image processing device.
An electro-optic device having a light-emitting property that can change depending on applied electric energy may include an organic light-emitting diode (OLED) device, an inorganic electroluminescent (EL) device, a field emission (FE) device, a surface conduction electron emitter (SE) device, a ballistic electron surface emitting (BS) device, a light-emitting diode (LED) device, and the like. A device having a light-transmitting property that can change depending on applied electric energy may include a light valve pixel of which the light transmittance is changed by the electric energy, such as a liquid crystal display pixel or an electrophoresis display pixel.
According to the display device, since the aforementioned image processing device is included, it is possible to safely detect the motion vector with sufficiently high accuracy and a realistic computation load, and it is possible to display a high quality of interpolation image.

Also, according to still another aspect of the invention, there is provided a program that can execute an image processing method in an image processing device which generates an interpolation image for compensating for the motion of an object in an image between adjacent frames, the image processing method comprising: detecting a motion vector of a detection target block on the basis of a comparison result obtained by dividing a frame into a plurality of blocks and comparing an image of each block with an image included in a search range of an adjacent frame; and generating the interpolation image on the basis of the detected motion vector, wherein in the detection of the motion vector, a first process having a wide search range or a second process having a narrow search range is selectively performed for each block, and wherein the search range of a block where the second process is performed is defined on the basis of the motion vector that has already been detected from the adjacent block, wherein in the detection of the motion vector, it is determined whether or not detection accuracy satisfies a reference level on the basis of the comparison result that can be obtained in a corresponding detection when a motion vector of the block where the second process is performed is detected and the first process is selected to detect the motion vector of the detection target block when the detection accuracy does not satisfy the reference level.
According to the program, the aforementioned image processing method is included. Therefore, it is possible to safely detect the motion vector with sufficiently high accuracy and a realistic computation load.

### BRIEF DESCRIPTION OF THE DRAWINGS

The invention will be described with reference to the accompanying drawings, wherein like numbers reference like elements.

Fig. 1 is a block diagram illustrating an image display apparatus 1 (1 A, 1 B, and 1 C) according to one of the embodiments of the invention.

Fig. 2 is a diagram for describing generation of interpolation image data in an interpolation image generating circuit 15 of an image display apparatus 1.

Fig. 3 is a schematic diagram for describing motion vector detection performed in a motion vector computing circuit 14 of an image display apparatus 1.

Fig. 4 is a schematic diagram for describing a wide area search performed by a motion vector computing circuit 14.

Fig. 5 is a schematic diagram for describing a limited search performed by a motion vector computing circuit 14.

Fig. 6 is a diagram for describing a block number.

Fig. 7 is a diagram for describing a problem that can occur when only the limited search is performed.

Fig. 8 is a diagram illustrating arrangement of limited search blocks and wide area search blocks for which only the limited search and only the wide area search are performed, respectively, by the motion vector computing circuit 14A according to the first embodiment of the invention.

Fig. 9 is a diagram for describing functions of the motion vector computing circuit 14A.

Fig. 10 is a flowchart illustrating a motion vector detection process according the first embodiment of the invention.

Fig. 11 is a diagram for describing functions of a motion vector computing circuit 14B according to the second embodiment of the invention.

Fig. 12 is a flowchart illustrating a motion vector detection process according to the second embodiment of the invention.

Fig. 13 is a diagram for describing functions of a motion vector computing circuit 14C according to the third embodiment of the invention.

Fig. 14 is a flowchart illustrating a motion vector detection process according to the third embodiment of the invention.

Fig. 15 is a perspective view illustrating a mobile personal computer having an image display apparatus 1 as a display unit.

Fig. 16 is a perspective view illustrating a mobile phone having an image display apparatus 1 as a display unit.

Fig. 17 is a perspective view illustrating a personal digital assistants (PDA) device having the image display apparatus 1 according to the invention.

### DESCRIPTION OF EXEMPLARY EMBODIMENTS

Hereinafter, three exemplary embodiments of the invention will be described in detail with reference to the accompanying drawings. In reference numerals in each drawing, "A", "B", and "C" correspond to first, second, and third embodiments, respectively. In the following description, elements common to the embodiments will be described, and then, unique elements of each embodiment will be sequentially described.

### ELEMENTS COMMON TO ALL EMBODIMENTS

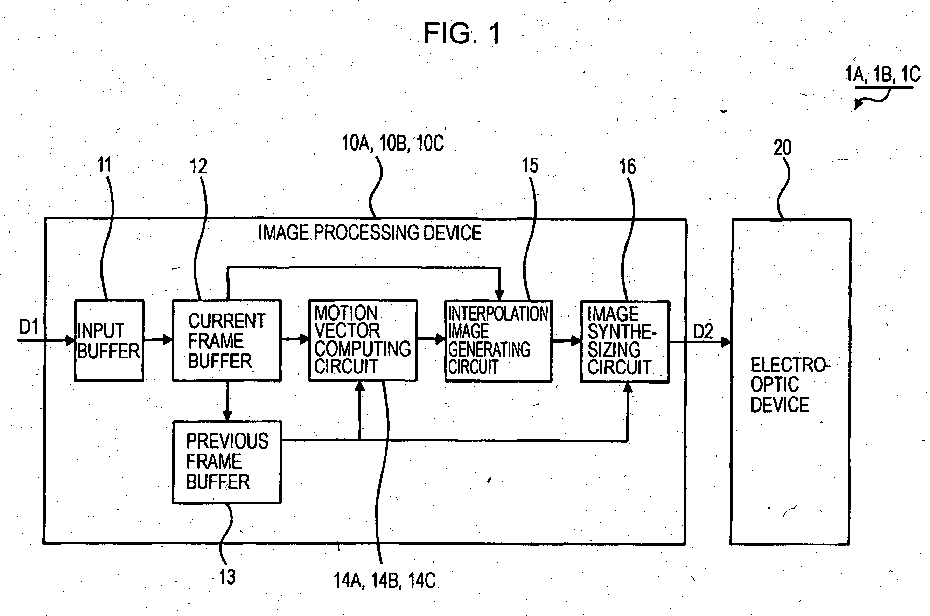

Fig. 1 is a block diagram illustrating an image display apparatus 1 (1A, 1B, and 1C) according to embodiments of the invention. The image display apparatus 1 receives an image having a low frame rate of 60 Hz, and converts it into an image having a high frame rate of 120 Hz by performing frame interpolation to display it. The image display apparatus 1 includes an image processing device 10 (10A, 10B, and 10C) and an electro-optic device 20. The image processing device 10 converts image data D1 corresponding to images of a low frame rate into image data D2 corresponding to images of a high frame rate by performing frame interpolation, and outputs them. The frames of the image data D1 and D2 have the same size.

The electro-optic device 20 is a hold-type display device in which a plurality of electro-optic components having a light-emitting property or a light-transmitting property that can be changed by received electric energy are arranged in a sheet shape. The electro-optic device 20 receives the image data D2 output from the image processing device 10, and changes the light-emitting properties or the light-transmitting properties of a plurality of electro-optic components according to the image data D2 to display an image corresponding to the image data D2. The electro-optic device 20 may include light-emitting components such as OLEDs.

In the hold-type display device, an outline of an object recognized by a viewer may become difficult to see (hereinafter, this phenomenon is called "a moving picture blotch") due to deviation between movement of an object included in an image and movement of a viewpoint of a viewer for tracking the movement of the object. In order to remove the moving picture blotch, there has been proposed a method in which gradation levels of each light-emitting component are not constantly held during the entire frame period, but each light-emitting component intermittently emits light, like an impulse-type display device such as a cathode ray tube (CRT) display. When there is an interval between each light-emitting period of each light-emitting component, flickering phenomenon by which brightness of the entire image is periodically fluctuated becomes serious. According to one of the embodiments of the invention, a frame rate of an image is increased by performing frame interpolation in order to prevent the moving picture blotch and the flickering. However, it is possible to reduce the moving picture blotch even by means of the hold-type display device if a time fraction of light emission or light transmission is controlled such that a light emission time period is reduced to within a range in which the flickering is not generated while the frame rate is increased.

The image processing device 10 includes an input buffer 11, a current frame buffer 12, a previous frame buffer 13, a motion vector computing circuit 14 (14A, 14B, 14C), an interpolation image generating circuit 15, and an image synthesizing circuit 16. The input buffer 11 receives the image data D1 and outputs the image data D1 in units of a frame. The current frame buffer 12 stores the most recent image data output from the input buffer 11. Hereinafter, the frame of the image data stored in the current frame buffer 12 is referred to as "a current frame". Just before the current frame buffer 12 starts to store the most recent image data, the previous frame buffer 13 starts to store the image data stored in the current frame buffer 12. Hereinafter, the image data stored in the previous frame buffer 13 is called "a previous frame".

The motion vector computing circuit 14 detects a motion vector representing a motion of an object from the previous frame to the current frame on the basis of the image data of the current frame and the previous frame. The interpolation image generating circuit 15 generates and outputs interpolation image data. The motion vector computing circuit 14 and the interpolation image generating circuit 15 are implemented by a digital signal processor (DSP) or a computer program executed according to one of the embodiments.

The interpolation image data generated by the interpolation image generating circuit 15 represents an image of an intermediate frame (hereinafter, referred to as an interpolation image) inserted between the previous frame and the current frame. Since such insertion is performed to compensate for the motion of an object in an image, the motion compensation is required to generate the interpolation image data. According to one of the embodiments of the invention, the interpolation image data is generated using the motion vector detected by the motion vector computing circuit 14 and the image data of the current frame. The image synthesizing circuit 16 alternately outputs previous frame image data updated every 1/60 second, and the interpolation image data generated every 1/60 second. As a result, the image data D2 is output. The frame of the interpolation image data in the image data D2 is inserted between the adjacent frames of the image data D1.

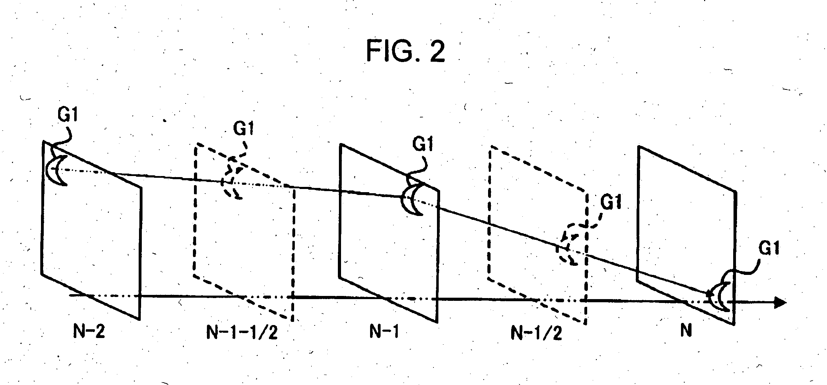

Fig. 2 is a diagram describing generation of interpolation image data in an interpolation image generating circuit 15. Referring to Fig. 2, the (N-1/2)th frame generated by the interpolation image generating circuit 15 is inserted between the Nth frame and the (N-1)th frame adjacent to each other for the image upon which frame interpolation is to be carried out. As shown in the drawing, in order to compensate for the motion of an object in an image, the interpolation image data of the (N-1/2)th frame is generated such that the object G1 corresponding to the (N-1/2)th frame is positioned on a straight line representing the motion of the object G1 between the (N-1)th frame and the Nth frame. In other words, it is important to appropriately detect the straight line or the motion vector obtained by projecting the straight line onto the frame.

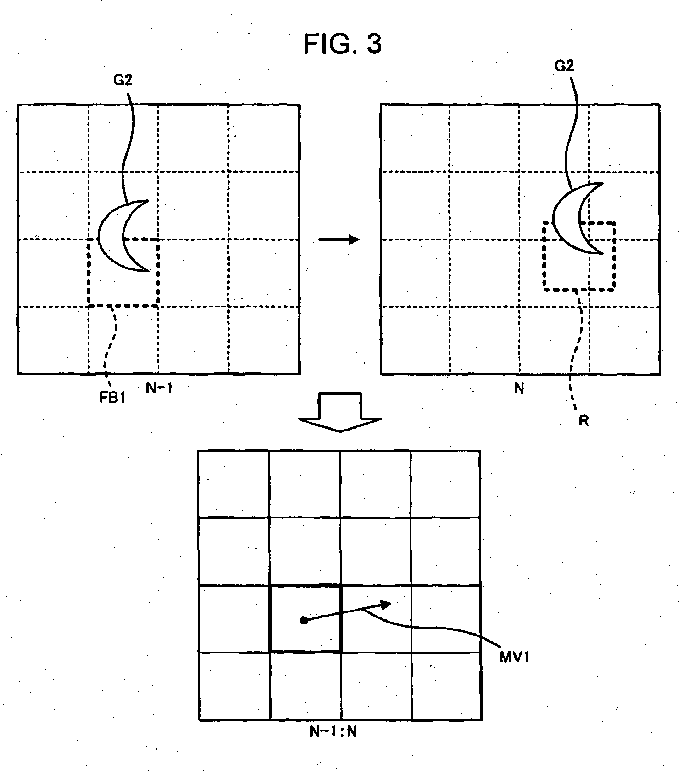

Fig. 3 is a schematic diagram describing motion vector detection performed by a motion vector computing circuit 14. This detection process is performed on the basis of a block matching method known in the art. When the motion vector representing the motion of an object from the previous frame to the current frame using the block matching method, the previous frame is divided into a plurality of blocks having the same shape and size, and the motion vector is detected from among the blocks. In order to detect the motion vector from among the blocks, while a search operation for defining an area having the same shape and size as those of the target block is performed among blocks of the current frame on a block-by-block basis, an image of the defined area is compared with an image of the target block, and the motion vector of the target block is determined on the basis of the comparison result. The way in which the area is defined and the image of the area is compared with the image of the target block may be arbitrarily selected. For example, the motion vector may be determined in such a way that an absolute difference sum is obtained by summing absolute values of differences in gradation value between pixels of the processing target location for all pixels, the area having the minimum absolute difference sum is selected, and a motion vector is determined by selecting the center of this area as a termination point and selecting the center of a target block as a start point. Alternatively, the motion vector may be determined in such a way that the number of pixels having the same gradation level as the processing target location is counted, the area having the highest count value is selected, and a motion vector is determined by selecting the center of this area as a termination point and selecting the center of a target block as a start point. In addition, the motion vector may not be determined when the absolute difference sum for a particular area is smaller than a predetermined reference value, or when the count value is equal to or larger than a predetermined reference value.

Fig. 3 illustrates an example of detecting the motion vector representing the motion of an object G2 from the (N-1)th frame to the Nth frame. In this example, the search for the area is performed by moving an area in the Nth frame by a single pixel or a plurality of pixels. Finally, an area R is defined. In Fig. 3, the motion vector MV1 obtained through the aforementioned process is mapped onto a virtual vector map. Since this vector map is obtained by overlapping the (N-1)th frame with the Nth frame, the center of each block corresponds with the start point of the motion vector of a target block. As can be recognized from the drawing, the motion vector MV1 represents the motion of an object G2 because a part of the object G2 is included in the block FB1.

The motion vector computing circuit 14 may selectively perform a wide area search or a limited search. While the wide area search can detect a large magnitude motion vector because it has a wide search range, a processing load becomes large as the number of image comparison processes is increased. While the limited search cannot detect a large-magnitude motion vector because it has a narrow search range, the processing load can be reduced as the number of image comparison processes is reduced.

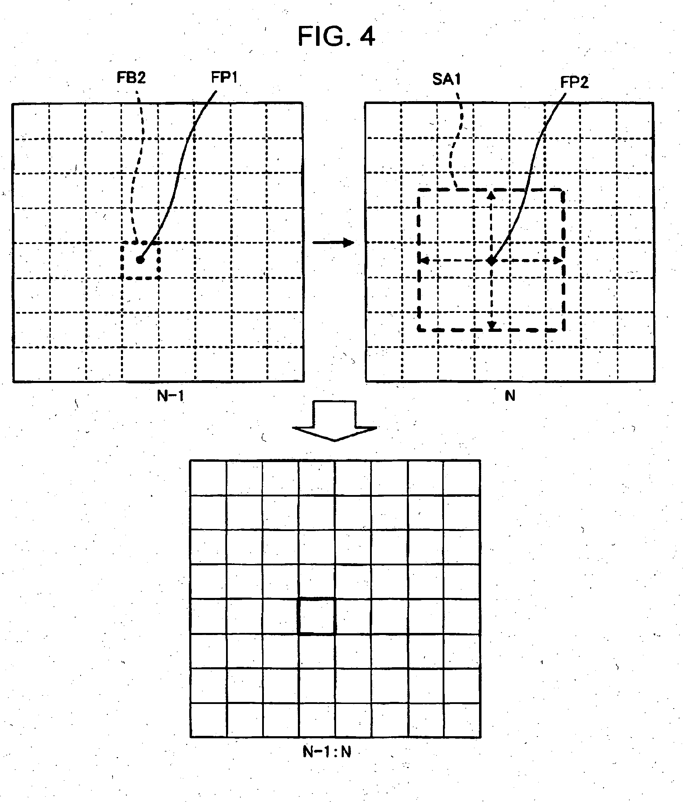

Fig. 4 is a schematic diagram describing a wide area search performed by a motion vector computing circuit 14. In the wide area search shown in Fig. 4, the search range is an area of 4x4 blocks which uses a point of an adjacent frame corresponding to a center point of a motion vector detection target block as a center point. For example, when the motion vector of the (N-1)th frame block FB2 is detected, the search range SA1 is an area of 4x4 blocks which uses the center point FP2 of the Nth frame block FB2 corresponding to the center point FP1 of the block FB2 as a center point. However, Fig. 4 shows just an example, and the area of the search range is not limited to the area of 4x4 blocks in the wide area search.

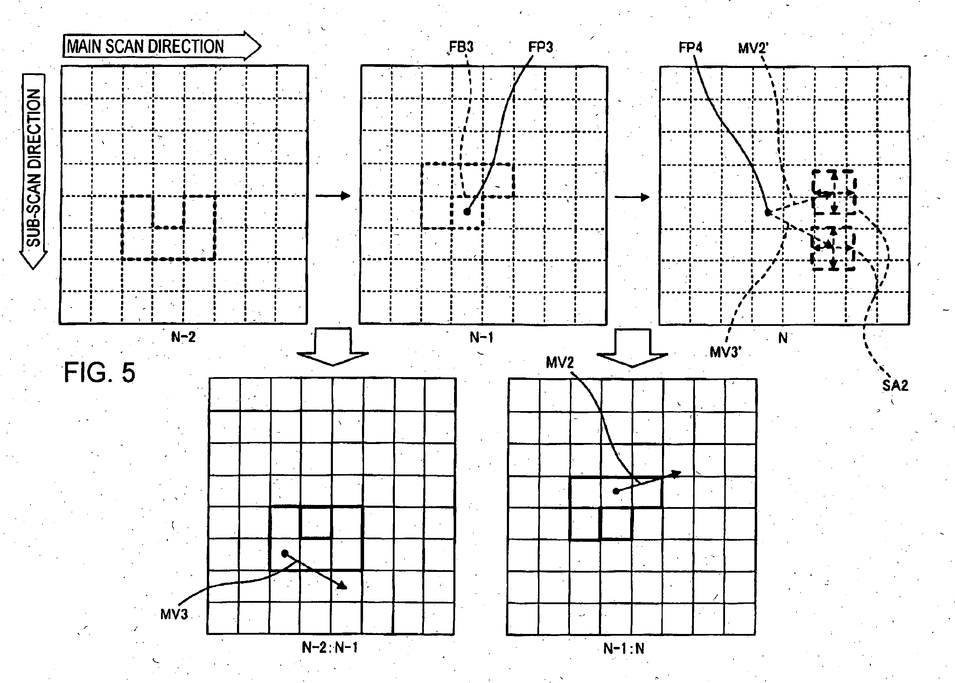

Fig. 5 is a schematic diagram describing a limited search performed by a motion vector computing circuit 14. The limited search is based on a fact that a probability that the motion of the object is significantly changed between adjacent blocks is very low. The search range is defined with reference to the motion vector that has been already detected for a block (hereinafter, referred to as "an adjacent block") adjacent to the motion vector detection target block, so that the motion vector can be detected with high accuracy even when using a narrow search range. The adjacent block includes a spatially adjacent block and a temporally adjacent block. The former is included in the same frame, and the latter is included in the adjacent frame.

The motion vector detection target block is sequentially shifted from one block to another. In Fig. 5, the target block is shifted along a row direction and a column direction. As soon as the motion vector detection is terminated for all blocks of a certain row, the motion vector detection is initiated for the blocks of the next row. In other words, the row direction is a main detection direction, and the column direction is a subsidiary detection direction.

Since the shifting is performed as described above, the motion vectors (including the motion vector MV2) of four adjacent blocks in the (N-1)th frame have been already detected when the motion vector of the block FB3 is detected from the (N-1)th frame to the Nth frame. Therefore, a representative vector MV2' for defining the search range can be determined with reference to these motion vectors. How to determine the representative vector from four motion vectors may be arbitrarily selected. In addition, the number of adjacent blocks from which the motion vectors are referenced within the same frame is not limited to four.

On the other hand, since the motion vectors (including the motion vector MV3) of five adjacent blocks within the (N-2)th frame have also been already detected, the representative vector MV3' can be determined with reference to these motion vectors. The way in which the representative vector is determined from five motion vectors may be arbitrarily selected. In addition, the number of adjacent blocks from which the motion vectors are referenced within the same frame is not limited to five.

Subsequently, locations of the termination points of the representative vectors MV2' and MV3' are obtained by using the point FP4 corresponding to the center point FP3 of the block FB3 within the (N-1)th frame as a start point, and an area of 1.5x1.5 blocks around each location of the termination point is selected as the search range. In addition, Fig. 5 is just an example, and the number of representative vectors is not limited to two. Also, the area of the search range is not limited to the area of 1.5x1.5 blocks. However, the search range of the limited search should be narrower than that of the wide area search.

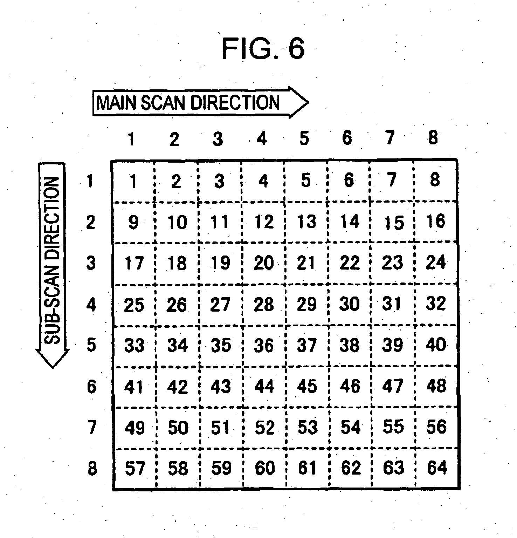

Fig. 6 is a diagram describing block numbers. As described above, the motion vector detection target block is sequentially shifted from one block to another. The block numbers are provided for specifying the order of the shifting. For example, when a single frame is divided into 8x8 blocks, one of integers 1 to 64 is given to each block as the block number, and the blocks are processed in ascending order from the lowest block number.

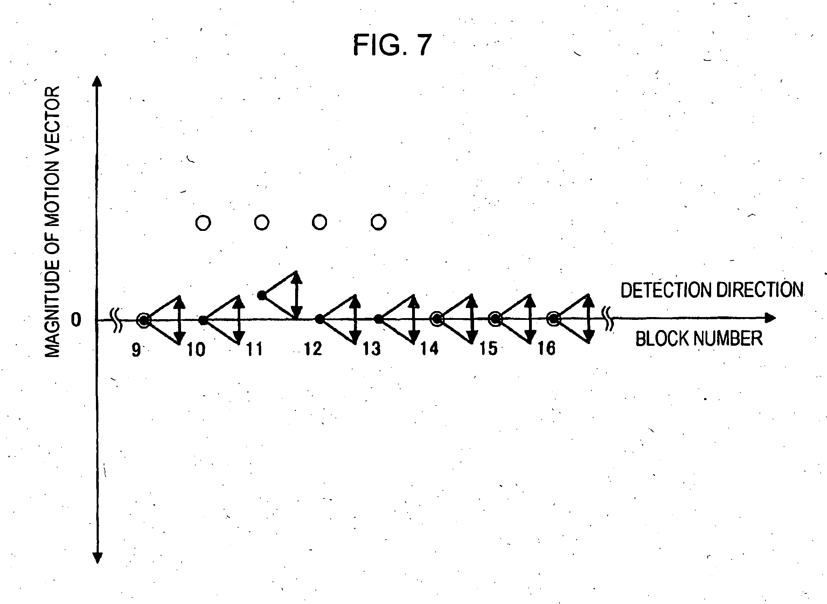

Fig. 7 is a diagram describing a problem that can occur when only the limited search is performed. In Fig. 7, the area of the search range is expressed as a length of a bidirectional arrow. In addition, it is assumed that there is no motion of the object in the blocks 1 to 9, the object is significantly moved over a narrow search limit in the blocks 10 to 13, and there is no motion of the object in the blocks 14 to 16.

As described above, although the limited search has a narrow search range, the motion vector can be detected with high accuracy. However, when any group of blocks is significantly moved over a narrow search range, the motion vector detection accuracy is seriously degraded. For example, referring to Fig. 7, for the blocks 1 to 9, the magnitude of the appropriate motion vector (shown as a white circle) is equal to the magnitude of the detected motion vector (shown as a black circle) as both of them are zero. For the blocks 10 to 13, the magnitudes of both vectors are significantly different. In other words, for the blocks 10 to 13, the center of the search range is dragged by the motion vector already detected for the adjacent block within the same frame. As a result, the motion vector detection accuracy is seriously degraded.

If the motion vector detection accuracy is successively degraded across a plurality of blocks, quality of the interpolation image data generated by the interpolation image generating circuit 15 is also seriously degraded. As a result, the moving picture blotch cannot be removed, and additional problems may occur. Therefore, a problem that the motion vector detection accuracy is successively degraded across a plurality of blocks should be prevented. According to the embodiments of the invention, in order to prevent such degradation, while the motion vector computing circuit 14 performs the limited search, the motion vector computing circuit 14 performs the wide area search for a particular block.

Furthermore, for all embodiments, the detection accuracy is evaluated on the basis of the comparison result that can be obtained when the motion vector of the target block is detected through the limited search, and the motion vector of the target block is detected through the wide area search when the result of the evaluation does not satisfy a predetermined reference level.

### FIRST EMBODIMENT

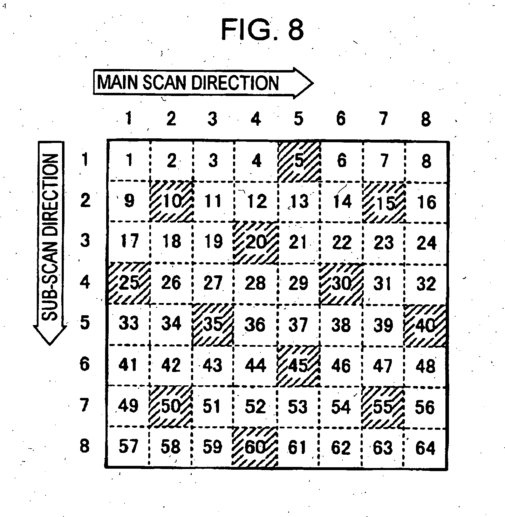

Fig. 8 is a diagram illustrating arrangement of limited search blocks and wide area search blocks for which only the limited search and only the wide area search are performed, respectively, by the motion vector computing circuit 14A according to a first embodiment of the invention. As shown in the drawing, the motion vector computing circuit 14A periodically performs a wide area search for every 5th block. In addition, the motion vector computing circuit 14A determines the center of the search range for the wide area search block using the motion vector of a particular adjacent block. Specifically, when a motion vector of a particular adjacent block is arranged such that a location corresponding to the center of the target block within an adjacent frame becomes a start point, a location corresponding to the termination point of the corresponding vector is determined as the center of the search range. The particular adjacent block is a block positioned directly to the left of the target block if the target block is not positioned in a leading end of a row. In addition, the particular adjacent block is a block positioned directly above the target block if the target block is positioned in a leading end of a row but not positioned in a leading end of a column.

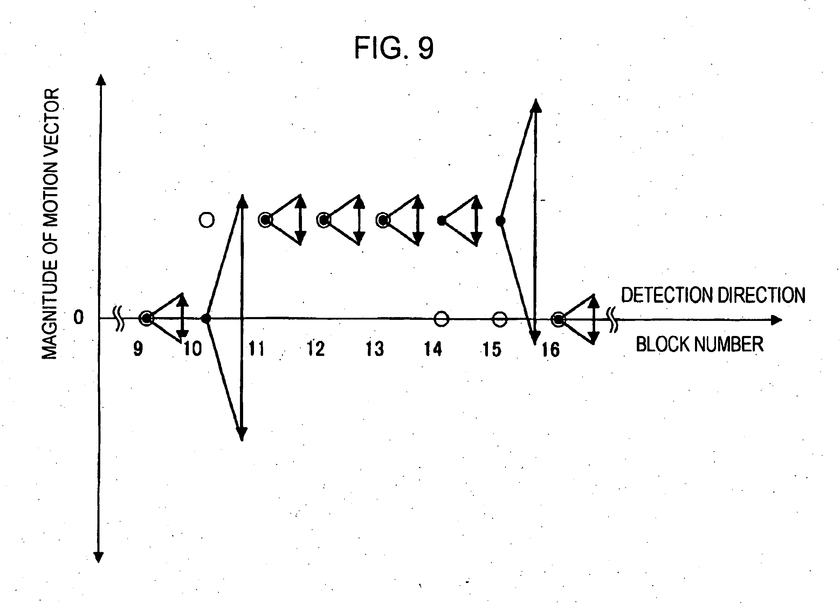

Fig. 9 is a diagram for describing functions of the motion vector computing circuit 14A according to the first embodiment of the invention. The assumption used in the Fig. 7 is similarly used in Fig. 8. The block 10 is a limited search block, in which the motion of the object is deviated from the search range, and the magnitude of the appropriate motion vector is significantly different from the magnitude of the detected motion vector. Since the next block is a wide area search block, the motion of the object is not deviated from the search range, and the magnitudes of both vectors are identical. Needless to say, the blocks 12 to 15 are limited search blocks, in which the center of the search range is dragged by the large motion vector already detected for an adjacent block within the same frame. As a result, while the magnitudes of both vectors are identical in the blocks 12 to 13, they are significantly different in the blocks 14 and 15. The block 16 is a wide area search block. Therefore, the motion of the object is not deviated from the search range, and magnitudes of both vectors are identical. For the next block, the center of the search range is dragged by the motion vector which has already been detected for the adjacent block within the same frame and has a magnitude of zero.

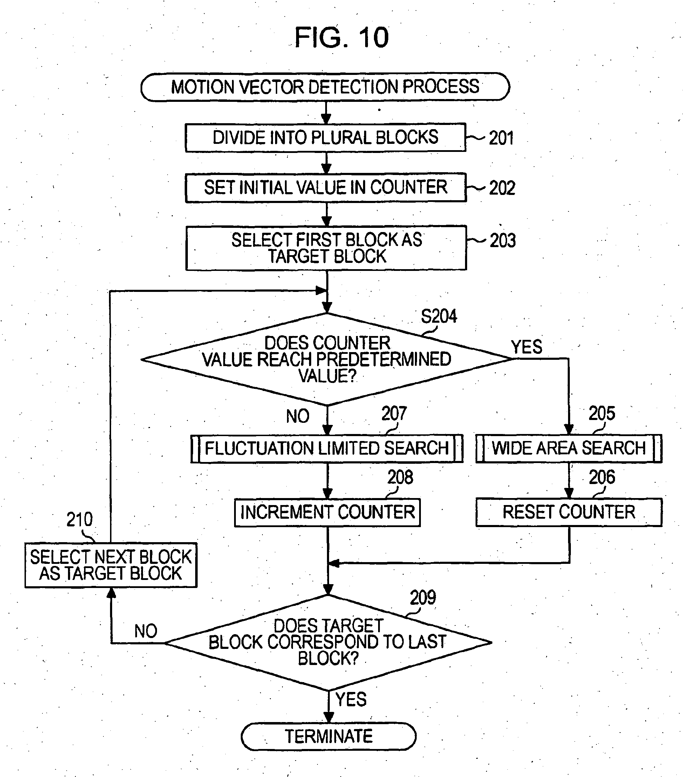

Fig. 10 is a flowchart illustrating a motion vector detection process according the first embodiment of the invention. In the motion vector detection process, a motion vector of a single frame is detected. Referring to Fig. 10, the motion vector computing circuit 14A divides the previous frame into a plurality of blocks (step 201). Specifically, the numbers of rows and columns of the blocks contained in a single frame are set. The numbers of the rows and columns are constant, it is not necessary to perform this setting for each frame. Subsequently, the motion vector computing circuit 14A sets an initial value in a counter for defining a wide area search block (step 202). For example, the initial value may be set to 1. Then, the motion vector computing circuit 14A selects a block 1 as a target block (step 203). This may be performed by, for example, writing 1 into a predetermined memory area which stores the block number.

Subsequently, the motion vector computing circuit 14A determines whether or not the count value has reached a predetermined value (step 204). If the counter value has reached a predetermined value, the motion vector of the target block is detected through a wide area search (step 205), and the counter is reset (step 206). If the counter value has not reached a predetermined value, the motion vector of the target block is detected through a limited search (step 207), and the counter is incremented (step 208). For example, the predetermined value may be set to five. The count value becomes an initial value when the counter is reset, and is increased by one when it is incremented. Then, the motion vector computing circuit 14A determines whether or not the target block corresponds to a last block (step 209). This determination is performed by comparing the block number stored in the predetermined memory area with the block number (for example, 63) of the last block. If the target block does not correspond to the last block, the motion vector computing circuit 14A selects the next block as the target block (step 210). For example, this operation may be performed by incrementing the block number stored in the predetermined memory area. Then, the process returns to step 204. The motion vector detection process is automatically terminated when it is determined that the counter value has reached a predetermined value as a result of step 209.

As described above, since the motion vector computing circuit 14A determines the search range in the limited search block on the basis of the motion vector already detected for the adjacent block, it is possible to readily detect an appropriate motion vector which is temporally and spatially continuous in comparison with a case in which the search range is not defined as described above. In addition, since the wide area search and the limited search are selectively performed for each block, it is possible to readily detect an appropriate motion vector which is temporally and spatially discontinuous in comparison with a case in which the limited search is performed for all blocks within a single frame. Furthermore, since the search range for the limited search block is defined on the basis of the motion vector already detected for the adjacent block, it is possible to detect the motion vector with sufficiently high accuracy on the basis of the already detected motion vectors. As described above, according to the motion vector computing circuit 14A, it is possible to safely detect the motion vector with sufficiently high accuracy. In addition, since the adjacent block includes a temporally adjacent block, it is possible to detect the motion vector for the current frame by using the result of the motion vector detection process for the previous frame. Accordingly, it is possible to rapidly improve the motion vector detection accuracy.

The motion vector computing circuit 14A compares an image of the target block with an image of a block included in the search range when the motion vector of a certain block is detected. The number of comparisons performed increases as the search range is widened, and the number of comparisons performed is reduced as the search range is reduced. As described above, while the motion vector computing circuit 14A performs the limited search, the motion vector computing circuit 14A performs the wide area search for a particular block. As a result, the number of image comparisons required for the interpolation image generating circuit 15 to generate the interpolation image data is significantly reduced in comparison with a case in which the motion vector is detected by performing the wide area search for all blocks. Therefore, according to the motion vector computing circuit 14A, it is possible to detect the motion vector with a realistic computation load.

With the motion vector computing circuit 14A according to the present embodiment, since the wide area search is periodically performed for a predetermined number of blocks, it is possible to reduce the number of blocks in which inappropriate motion vectors are successively detected due to the wide area search. Therefore, it is possible to prevent the problem that the motion vector detection accuracy is successively degraded across a plurality of blocks.

In addition, the motion vector computing circuit 14A defines the search range for the same frame as that of the target block on the basis of the motion vector already detected for the adjacent block when the motion vectors of remaining second and subsequent blocks are detected through the wide area search. Therefore, with the motion vector computing circuit 14A according to the present embodiment, it is possible to detect temporally and spatially continuous motion vectors for second and subsequent blocks through the wide area search. This is advantageous in comparison with a wide area search of the related art, with which spatially continuous motion vectors cannot be detected.

In addition, since the image processing device 10A includes the motion vector computing circuit 14A which safely detects the motion vector with sufficiently high accuracy and a realistic computation load and an interpolation image generating circuit 15 which generates the interpolation image data on the basis of the motion vector detected by the motion vector computing circuit 14, it is possible to generate the interpolation image data of higher quality in comparison with an image processing device which does not has the motion vector computing circuit 14A. Furthermore, in the image processing device 10A, the image data D1 having a frame rate of 60 Hz is received, interpolation image data having high quality is generated from the received image data D1, and frame interpolation is performed to generate image data D2 having a frame rate of 120 Hz. In other words, it is possible to generate image data D2 having higher quality in comparison with the image data having a frame rate of 120 Hz generated from the image data D1 by the image processing device that does not have the motion vector computing circuit 14.

Furthermore, the image display apparatus 1A includes an image processing device 10A capable of generating interpolation image data having relatively high quality with a realistic computation load and an electro-optic device 20 which receives the interpolation image data generated by the image processing device 10A and displays an image interpolated with this data, it is possible to display an interpolated image having higher quality with a realistic computation load in comparison with an image display apparatus that does not have the image processing device 10A. In addition, the image display apparatus 1A receives the image data 1 and displays the image obtained using the image data D2. As described above in association with the quality of the image data D2, according to the image display apparatus 1A, it is possible to display an image of higher quality in comparison with an image displayed by an image display apparatus that does not have the image processing device 10A using the image data D1. Accordingly, it is possible to prevent a moving picture blotch and flickering.

### SECOND EMBODIMENT

A motion vector computing circuit 14 according to the second embodiment of the invention basically performs a limited search. When the motion vector is detected from a certain block as a result of the limited search, detection accuracy is evaluated on the basis of the comparison result that can be obtained from the detection process for the target block, and it is determined whether or not the evaluation satisfies a reference level. If the evaluation does not satisfy the reference level, the motion vector of the target block is detected through a wide area search. In addition, similar to the motion vector computing circuit 14A, the motion vector computing circuit 14B determines the center of the search range in the wide area search on the basis of the motion vector of a particular adjacent block.

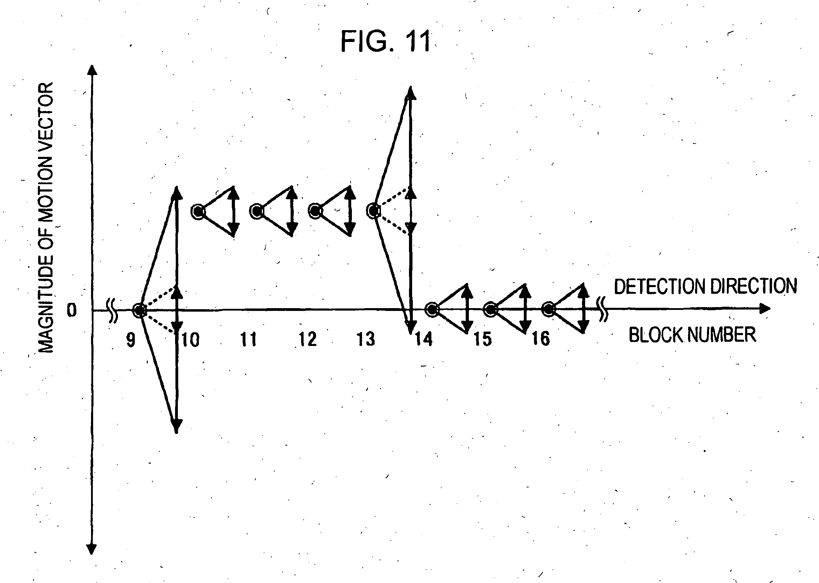

Fig. 11 is a diagram for describing functions of a motion vector computing circuit 14B according to the second embodiment of the invention. The assumption used in Fig. 7 is similarly applied to Fig. 11. As shown in Fig. 11, for the block 10, the limited search is performed, and then the wide area search is performed. As a result, the magnitude (shown as a white circle) of the appropriate motion vector is identical to the magnitude (shown as a black circle) of the detected motion vector. For the blocks 11 to 13, the limited search is performed, and the magnitudes of both vectors are identical to each other. This is because the center of the search range in such a block is dragged by a motion vector that has a large magnitude and has already been detected from an adjacent block within the same frame. For the next block, the limited search is performed, and then, the wide area search is performed. As a result, the magnitudes of both vectors are identical to each other. For the blocks 15 and 16, only the limited search is performed, and the magnitudes of both vectors are identical to each other. This is because the center of the search range in such a block is dragged by a motion vector that has a magnitude of zero and has already been detected from an adjacent block within the same frame.

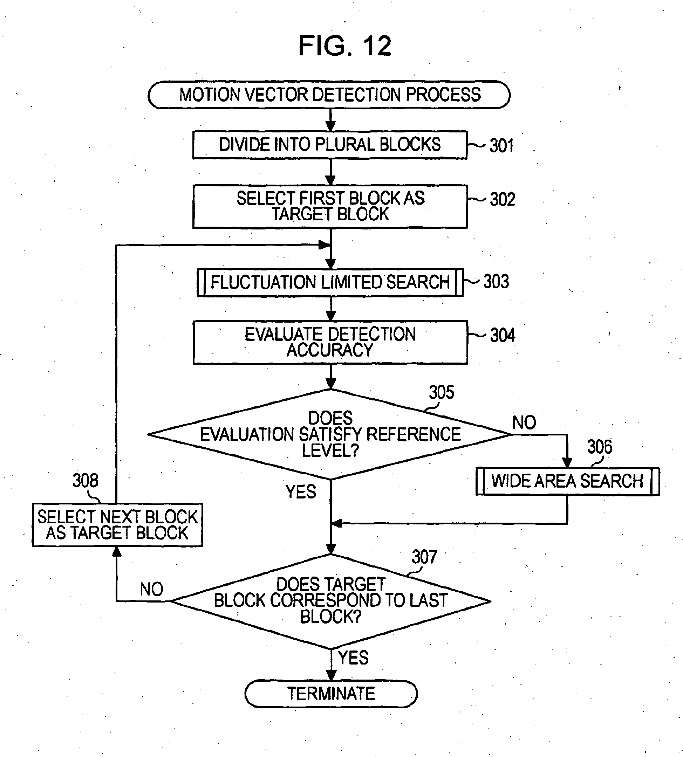

Fig. 12 is a flowchart illustrating a motion vector detection process according to the second embodiment of the invention. As shown in Fig. 12, the motion vector computing circuit 14B divides the previous frame into a plurality of blocks (step 301). Specifically, the numbers of rows and columns of the blocks contained in a single frame are set. If the numbers of rows and columns are constant, it is not necessary to perform the setting for each frame. Then, the motion vector computing circuit 14B selects the block 1 as a target block (step 302).

Subsequently, the motion vector computing circuit 14B detects the motion vector of the target block through the limited search (step 303), and evaluates its detection accuracy (step 304). This evaluation is based on the comparison result that has been obtained from this detection. How to evaluate the accuracy may be arbitrarily selected. For example, it is possible to perform the evaluation by directly using a result of the comparison between an image of the target block and an image of an area obtained by selecting the termination point of the corresponding motion vector that can be obtained from this detection as a center point.

Subsequently, the motion vector computing circuit 14B determines whether or not the result of the evaluation satisfies a predetermined reference level (step 305). If the result of the evaluation does not satisfy the reference level, the motion vector of the target block is detected through the wide area search (step 306). Then, the motion vector computing circuit 14B determines whether or not the target block corresponds to a last block (step 307). If the target block corresponds to the last block, the motion vector detection process is terminated. Otherwise, if the target block does not correspond to the last block, a process returns to step 303 by selecting the next block as the target block (step 308).

As described above, according to the motion vector computing circuit 14B, the image processing device 10B, or the image display apparatus 1B, it is possible to obtain advantages similar to those obtained from the motion vector computing circuit 14A, the image processing device 10A, and the image display apparatus 1A according to the first embodiment. As obviously recognized from Fig. 11, according to the motion vector computing circuit 14B, it is possible to safely detect an appropriate motion vector even under the assumption applied in Fig. 7. In other words, it is possible to safely detect the appropriate motion vector for the block from which the appropriate motion vector can be detected through the limited search and the wide area search. Furthermore, since the wide area search is performed only when the appropriate motion vector cannot be detected through the limited search, it is possible prevent a problem that the wide area search having a wide search range is performed for the block from which the appropriate motion vector can be detected even by the limited search having a narrow search range.

Meanwhile, the number of blocks required to detect the motion vector through the wide area search is not defined when the motion vector is detected by the motion vector computing circuit 14B. The motion vector detection may be performed through the wide area search for the block from which the motion vector detection has been performed through the limited search. Therefore, the number of image comparisons performed by the motion vector computing circuit 14B may be larger or smaller than the number of image comparisons performed by the motion vector computing circuit 14A when the interpolation image generating circuit 15 generates the interpolation image data. Since the motion vector detection is performed by the motion vector computing circuit 14B through the wide area search only when the result of the evaluation for the detection accuracy of the motion vector of the target block does not satisfy a predetermined reference level, it is possible to reduce the number of comparisons by appropriately defining the predetermined reference level in comparison with a case in which the motion vector is detected through the wide area search for all blocks. Since the motion vector computing circuit 14B basically performs the limited search, the number of blocks from which the appropriate motion vector cannot be detected through the limited search is generally smaller than the number of blocks contained in a single block. Therefore, according to the motion vector computing circuit 14B, it is possible to obtain sufficiently high accuracy for detecting the appropriate motion vector while the number of comparisons is sufficiently reduced.

### THIRD EMBODIMENT

A motion vector computing circuit 14 according to the third embodiment of the invention detects the motion vector from each block after arrangement of wide area search blocks and limited search blocks is determined for each frame. In addition, similarly to the motion vector computing circuit 14A, the motion vector computing circuit 14C determined the center of the search range in the wide area search by using the motion vector of a particular adjacent block.

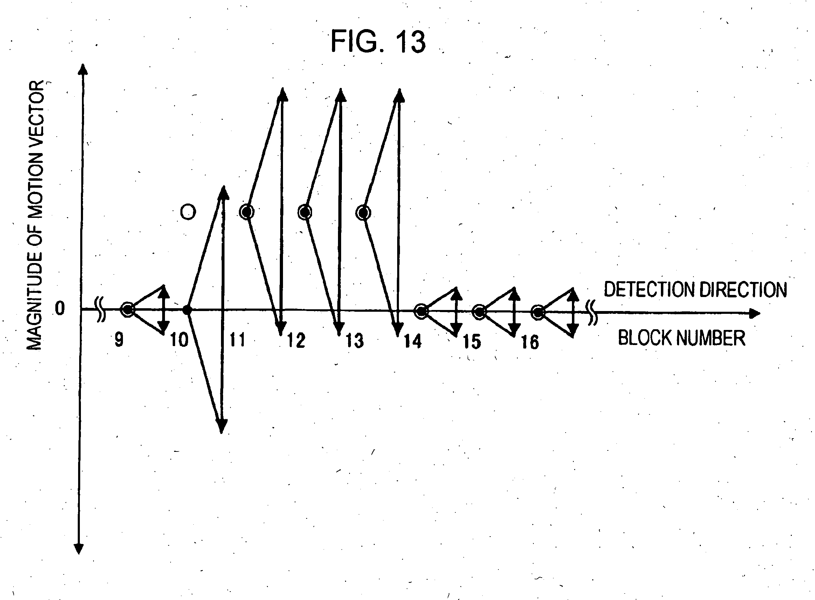

Fig. 13 is a diagram for describing functions of a motion vector computing circuit 14C according to the third embodiment of the invention. The assumption used in Fig. 7 is similarly applied in Fig. 13. In Fig. 13, blocks 9, 10, 15, and 16 are the limited search blocks, and blocks 11 to 14 are the wide area search blocks. For the block 10 corresponding to the limited search block, the magnitude of the appropriate motion vector is significantly different from the magnitude of the detected motion vector. For the remaining blocks, both vectors are identical to each other. For the blocks 11 to 13 corresponding to the wide area search blocks, the magnitude of the appropriate motion vector is very large, but the magnitudes of both vectors are identical to each other. This is because the center of the search range in these blocks is dragged by the motion vector which has a large magnitude and has already been detected from the adjacent block within the same frame. This fact can be similarly applied to the blocks 15 and 16.

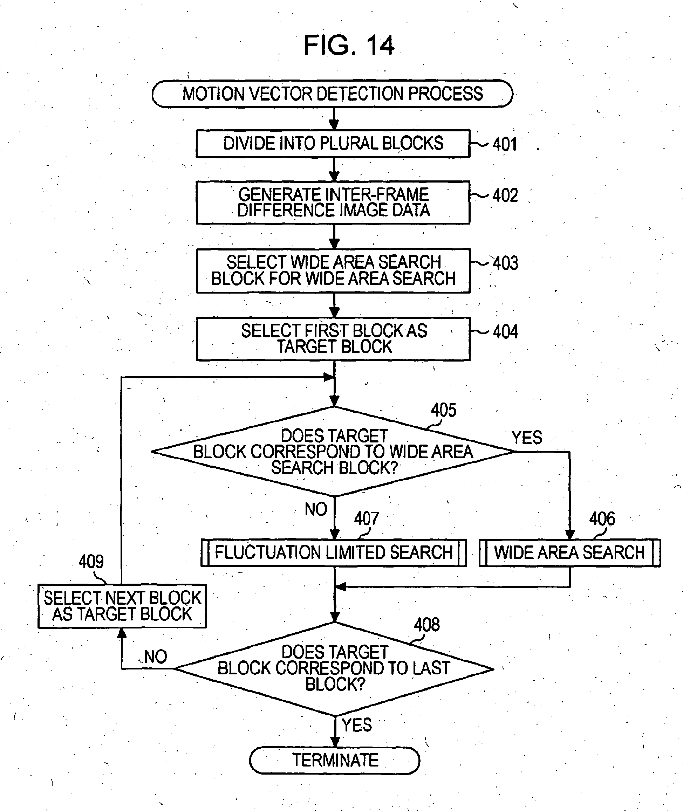

Fig. 14 is a flowchart illustrating a motion vector detection process according to the third embodiment of the invention. As shown in the drawing, the motion vector computing circuit 14 divides the previous frame into a plurality of blocks (step 401). Specifically, the numbers of rows and columns of the blocks contained in a single frame are determined. If the numbers of rows and columns are constant, it is not necessary to perform the setting for each frame. Then, an inter-frame difference image data representing a difference image is generated (step 402). The difference image is an image representing a difference between a current frame image and a previous frame image. The gradation value of the pixel of the difference image corresponds to an absolute value of a gradation value difference between the pixels in the same location. Therefore, the inter-frame difference image data corresponds to the data showing distribution of change of gradation values from the previous frame to the current frame.

Subsequently, the motion vector computing circuit 14C selects at least a block within the previous frame as the wide area search block on the basis of the generated inter-frame difference image data (step 403). This selection is performed such that the number of image comparisons performed by the motion vector computing circuit 14B becomes a realistic number when the interpolation image generating circuit 15 generates the interpolation image data. Specifically, a predetermined number of blocks may be selected as the wide area search blocks on the basis of a predetermined priority and the sum of gradation values of each block in the inter-frame difference image data. The predetermined number is an upper limit for allowing the number of comparisons to be realistic and is previously determined. The predetermined priority is previously determined such that the motion vector detection accuracy can be improved. For example, a highest sum of the gradation values of each block in the inter-frame difference image data may have a highest priority. Alternatively, a predetermined number of blocks may be randomly selected as the wide area search block from the blocks of which the sum of the gradation values in the inter-frame difference image data reaches a predetermined reference level. Then, the motion vector computing circuit 14C selects the first block as the target block (step 404).

Subsequently, the motion vector computing circuit 14C determines whether or not the target block corresponds to the wide area search block (step 405). If the target block corresponds to the wide area search block, the motion vector of the target block is detected through the wide area search (step 406). If the target block does not correspond to the wide area search block, the motion vector of the target block is detected through the limited search (step 407). Then, the motion vector computing circuit 14C determines whether or not the target block corresponds to the last block (step 408). If the target block corresponds to the last block, the motion vector detection process is terminated. Otherwise, if the target block does not correspond to the last block, the next block is selected as the target block (step 409), and a process returns to step 405.

As described above, according to the motion vector computing circuit 14C, the image processing device 10C, or the image display apparatus 1C, it is possible to obtain advantages similar to those obtained from the motion vector computing circuit 14A, the image processing device 10A, and the image display apparatus 1A according to the first embodiment. As obviously recognized from Fig. 13, according to the motion vector computing circuit 14C, it is possible to increase a probability for performing the wide area search for the blocks requiring the wide area search. Therefore, it is possible to detect the appropriate motion vector with higher accuracy, and also, it is possible prevent a problem that the wide area search having a wide search range is performed for the block from which the appropriate motion vector can be detected even by the limited search having a narrow search range.

### G: MODIFICATION

Although the wide area search blocks is periodically arranged according to the first embodiment of the invention, and the wide area search blocks are defined on the basis of the inter-frame difference image data, the invention is not limited thereto. For example, the wide area search blocks may be randomly defined without depending on the inter-frame difference image data. In addition, as a modification of the aforementioned embodiments, the center of the search range in the wide area search may be determined as the center of the target block.

In addition, the frame used when the interpolation image data is generated is not limited to the current frame. The interpolation image data may be generated using only the previous frames, or may be generated using both the previous and current frames. Although it has been described that the frame rate is doubled, a triple frame rate may be adopted. Although it has been described that the frame rate is increased by the frame interpolation, the length of the image may be increased without changing the frame rate.

Furthermore, the aforementioned embodiments may be combined with each other.

### E: APPLICATION

Hereinafter, an electric apparatus having a light-emitting device according to the invention will be described.

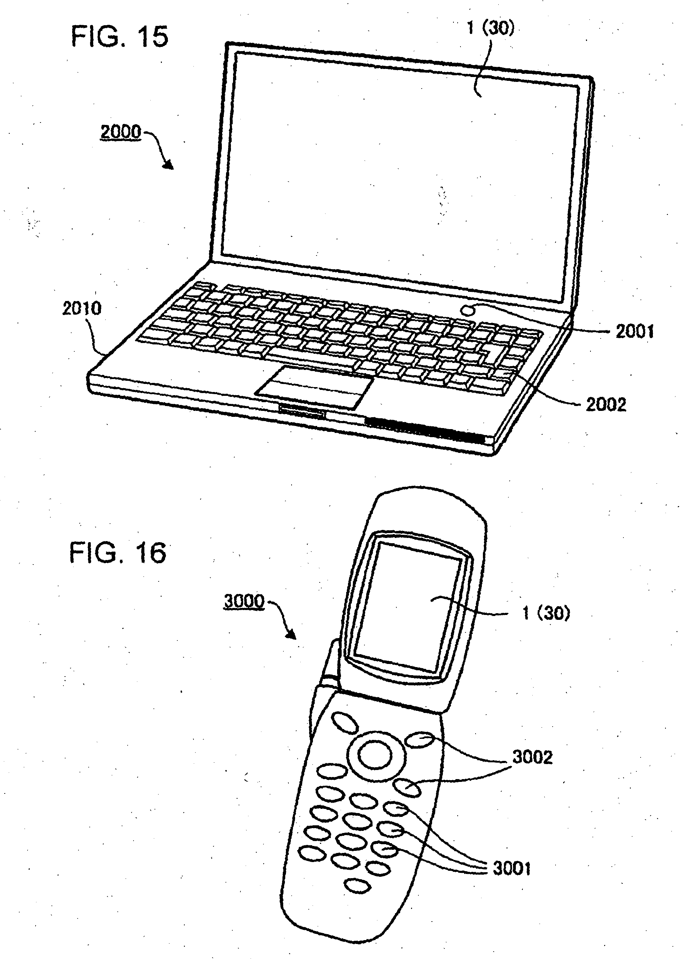

Fig. 15 is a perspective view illustrating a mobile personal computer having the aforementioned image display apparatus 1. The personal computer 2000 includes the image display apparatus as a main body 2010. The main body 2010 has a power switch 2001 and a keyboard 2002. A display panel 30 (corresponding to the image display apparatus 1) of the personal computer 2000 uses an OLED device as the electro-optic component. Therefore, it is possible to provide a wide angle of view and a clear screen.

Fig. 16 is a perspective view illustrating a mobile phone having an image display apparatus 1 according to the invention. The mobile phone 3000 includes a plurality of manipulation buttons 3001, a scroll button 3002, and the image display apparatus 1 according to the invention. A screen displayed on the display panel 30 (corresponding to the image display apparatus 1) is scrolled by manipulating the scroll button 3002.

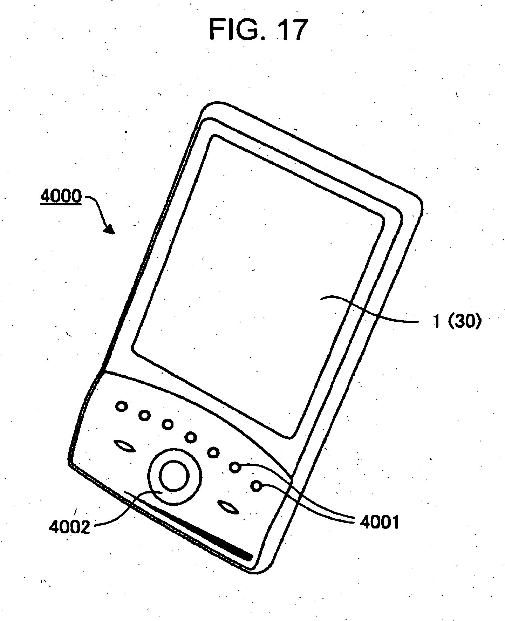

Fig. 17 is a perspective view illustrating a personal digital assistants (PDA) device having the image display apparatus 1 according to the invention. The PDA 4000 includes a plurality of manipulation buttons 4001, a power switch 4002, and the image display apparatus 1 according to the invention. Various information such as an address list or a schedule board is displayed on the display panel 30 (corresponding to the image display apparatus 1) by manipulating the power switch 4002.

Alternatively, an electric apparatus having the image display apparatus 1 according to the invention may include other display devices such as a television set and a video camera in addition to those shown in Figs. 15 to 17. Also, an electric device having the image processing device 10 according to the invention may include other image data output devices such as a television set, a video camera, and a video player in addition to those shown in Figs. 15 to 17.

## Claims

1. An image processing method which generates an interpolation image for compensating, for the motion of an object in an image between adjacent frames, the image processing method comprising:
detecting a motion vector (MV) of a detection target block (FB) on the basis of a comparison result obtained by dividing a frame into a plurality of blocks and comparing an image of each block with an image included in a search range (SA1,SA2) of an adjacent frame; and
generating the interpolation image on the basis of the detected motion vector (MV),
wherein in the detection of the motion vector (MV),
a first process having a wide search range (SA1) or a second process having a narrow search range (SA2) is selectively performed for each block, and
wherein the search range of a block where the second process is performed is defined on the basis of the motion vector (MV) that has already been detected from the adjacent block, wherein in the detection of the motion vector, it is determined whether or not detection accuracy satisfies a reference level on the basis of the comparison result that can be obtained in a corresponding detection when a motion vector of the block where the second process is performed is detected, and the first process is selected to detect the motion vector of the detection target block when the detection accuracy does not satisfy the reference level.

2. The image processing method according to claim 1, wherein in the detection of the motion vector (MV), it is determined whether or not a detection target block (FB) corresponds to a particular block, and the first process is selected for the detection target block (FB) if the detection target block (FB) corresponds to the particular block.

3. The image processing method according to claim 2, further comprising:
generating a difference image representing differences in gradation value in pixels between images of the adjacent frames; and
defining the particular block on the basis of the difference image.

4. The image processing method according to claim 3, wherein in the defining of the particular block, the number of the particular blocks is determined such that a processing from the generation of the difference image to the generation of the interpolation image can be performed within a predetermined time limit.

5. The image processing method according to any of claims 1 to 4, wherein in the detection of the motion vector (MV), the search range (SA1, SA2) is defined on the basis of the motion vector that has already been detected from an adjacent block in the same frame as that of the detection target block (FB) when the motion vector (MV) is detected from second and subsequent blocks through the first process.

6. An image processing device which generates an interpolation image for compensating for the motion of an object in an image between adjacent frames, the image processing device comprising:
a detection circuit (14) which detects a motion vector (MV) of a detection target block (FB) on the basis of a comparison result obtained by dividing a frame into a plurality of blocks and comparing an image of each block with an image included in a search range of an adjacent frame; and
a generating circuit (15) which generates the interpolation image on the basis of the motion vector (MV) detected by the detection circuit,
wherein the detection circuit (14) selectively uses a first process having a wide search range (SA1) and a second process having a narrow search range (SA2) for each block as a motion vector detection process, and defines the search range of a block where the second process is performed on the basis of the motion vector (MV) that has already been detected from the adjacent block, wherein in the detection of the motion vector, it is determined whether or not detection accuracy satisfies a reference level on the basis of the comparison result that can be obtained in a corresponding detection when a motion vector of the block where the second process is performed is detected, and the first process is selected to detect the motion vector of the detection target block when the detection accuracy does not satisfy the reference level.

7. An image display apparatus comprising:
the image processing device (10) according to claim 6; and
an electro-optic device (20) in which a plurality of electro-optic components having a light-emitting property or a light-transmitting property changed by received electric energy are arranged in a sheet shape,
wherein the interpolation image is displayed such that the light-emitting property or the light-transmitting property of a plurality of the electro-optic components is changed depending on the interpolation image generated by the image processing device (10).

8. A program that can execute an image processing method in an image processing device which generates an interpolation image for compensating for the motion of an object in an image between adjacent frames, the image processing method comprising:
detecting (14) a motion vector (MV) of a detection target block (FB) on the basis of a comparison result obtained by dividing a frame into a plurality of blocks and comparing an image of each block with an image included in a search range of an adjacent frame; and
generating (15) the interpolation image on the basis of the detected motion vector (MV),
wherein in the detection of the motion vector (MV),
a first process having a wide search range (SA1) or a second process having a narrow search (SA2) range is selectively performed for each block, and
wherein the search range of a block where the second process is performed is defined on the basis of the motion vector (MV) that has already been detected from the adjacent block, wherein in the detection of the motion vector, it is determined whether or not detection accuracy satisfies a reference level on the basis of the comparison result that can be obtained in a corresponding detection when a motion vector of the block where the second process is performed is detected, and the first process is selected to detect the motion vector of the detection target block when the detection accuracy does not satisfy the reference level.

9. A user terminal comprising means operable to perform the method of any of claims 1 to 5.

10. A program storage device readable by a processing apparatus, the device embodying a program of instructions executable by the processing apparatus to perform the method of any of claims 1 to 5.

## Patentansprüche

1. Bildverarbeitungsverfahren, das ein Interpolationsbild zum Kompensieren der Bewegung eines Objekts in einem Bild zwischen benachbarten Rahmen erzeugt, wobei das Bildverarbeitungsverfahren umfasst:
Erfassen eines Bewegungsvektors (MV) eines Erfassungszielblocks (FB) auf der Grundlage eines Vergleichsergebnisses, das durch Aufteilen eines Rahmens in mehrere Blöcke und Vergleichen eines Bildes jedes Blocks mit einem in einem Suchbereich (SA1, SA2) eines benachbarten Rahmens beinhalteten Bild erhalten wird; und
Erzeugen des Interpolationsbildes auf der Grundlage des erfassten Bewegungsvektors (MV),
wobei bei der Erfassung des Bewegungsvektors (MV)
wahlweise für jeden Block ein erster Vorgang mit einem breiten Suchbereich (SA1) oder zweiter Vorgang mit einem engen Suchbereich (SA2) durchgeführt wird, und
der Suchbereich eines Blocks, bei dem der zweite Vorgang durchgeführt wird, auf der Grundlage des Bewegungsvektors (MV) definiert wird, der bereits für den benachbarten Block erfasst wurde,
wobei, bei der Erfassung des Bewegungsvektors, auf der Grundlage des Vergleichsergebnisses, das bei einer entsprechenden Erfassung erhalten werden kann, wenn ein Bewegungsvektor des Blocks, bei dem der zweite Vorgang durchgeführt wird, erfasst wird, bestimmt wird, ob die Erfassungsgenauigkeit einem Referenzlevel entspricht oder nicht, und der erste Vorgang gewählt wird, um den Bewegungsvektor des Erfassungszielblocks zu erfassen, wenn die Erfassungsgenauigkeit nicht dem Referenzlevel entspricht.

2. Bildverarbeitungsverfahren nach Anspruch 1, bei dem bei der Erfassung des Bewegungsvektors (MV) bestimmt wird, ob ein Erfassungszielblock (FB) einem bestimmten Block entspricht oder nicht, und der erste Vorgang für den Erfassungszielblock (FB) gewählt wird, wenn der Erfassungszielblock (FB) dem bestimmten Block entspricht.

3. Bildverarbeitungsverfahren nach Anspruch 2, ferner umfassend:
Erzeugen eines Unterschiedsbildes, das Unterschiede des Gradationswerts in Pixeln zwischen Bildern der benachbarten Rahmen darstellt; und
Definieren des bestimmten Blocks auf der Grundlage des Unterschiedsbildes.

4. Bildverarbeitungsverfahren nach Anspruch 3, bei dem beim Definieren des bestimmten Blocks die Anzahl der bestimmten Blöcke so bestimmt wird, dass eine Bearbeitung von der Erzeugung des Unterschiedsbildes zu der Erzeugung des Interpolationsbildes innerhalb einer vorgegebenen Zeitbegrenzung durchgeführt werden kann.

5. Bildverarbeitungsverfahren nach einem der Ansprüche 1 bis 4, bei dem bei der Erfassung des Bewegungsvektors (MV) der Suchbereich (SA1, SA2) auf der Grundlage des Bewegungsvektors definiert wird, der bereits für einen benachbarten Block in dem gleichen Rahmen wie der des Erfassungszielblocks (FB) erfasst wurde, wenn der Bewegungsvektor (MV) für zweite und nachfolgende Blöcke durch den ersten Vorgang erfasst wird.

6. Bildverarbeitungseinrichtung, die ein Interpolationsbild zum Kompensieren der Bewegung eines Objekts in einem Bild zwischen benachbarten Rahmen erzeugt, wobei die Bildverarbeitungseinrichtung umfasst:
eine Erfassungsschaltung (14), die einen Bewegungsvektors (MV) eines Erfassungszielblocks (FB) auf der Grundlage eines Vergleichsergebnisses erfasst, das durch Aufteilen eines Rahmens in mehrere Blöcke und Vergleichen eines Bildes jedes Blocks mit einem in einem Suchbereich eines benachbarten Rahmens beinhalteten Bild erhalten wird; und
eine Erzeugungsschaltung (15), die das Interpolationsbild auf der Grundlage des durch die Erfassungsschaltung erfassten Bewegungsvektors (MV) erzeugt,
wobei die Erfassungsschaltung (14) wahlweise für jeden Block einen ersten Vorgang mit einem breiten Suchbereich (SA1) und einen zweiten Vorgang mit einem engen Suchbereich (SA2) als einen Bewegungsvektorerfassungsvorgang verwendet und den Suchbereich eines Blocks, bei dem der zweite Vorgang durchgeführt wird, auf der Grundlage des Bewegungsvektors (MV) definiert, der bereits für den benachbarten Block erfasst wurde,
wobei, bei der Erfassung des Bewegungsvektors, auf der Grundlage des Vergleichsergebnisses, das bei einer entsprechenden Erfassung erhalten werden kann, wenn ein Bewegungsvektor des Blocks, bei dem der zweite Vorgang durchgeführt wird, erfasst wird, bestimmt wird, ob die Erfassungsgenauigkeit einem Referenzlevel entspricht oder nicht, und der erste Vorgang gewählt wird, um den Bewegungsvektor des Erfassungszielblocks zu erfassen, wenn die Erfassungsgenauigkeit nicht dem Referenzlevel entspricht.

7. Bildanzeigevorrichtung umfassend:
die Bildverarbeitungseinrichtung (10) nach Anspruch 6; und
eine elektrooptische Einrichtung (20), bei der mehrere elektrooptische Komponenten mit einer lichtemittierenden oder einer lichttransmittierenden Eigenschaft, die durch eine aufgenommene elektrische Energie geändert wird, in einer Blattform angeordnet sind,
wobei das Interpolationsbild so angezeigt wird, dass die lichtemittierende oder die lichttransmittierende Eigenschaft mehrerer der elektrooptischen Komponenten abhängig von dem durch die Bildverarbeitungseinrichtung (10) erzeugten Interpolationsbild geändert wird.

8. Programm, das ein Bildverarbeitungsverfahren in einer Bildverarbeitungseinrichtung ausführen kann, das ein Interpolationsbild zum Kompensieren der Bewegung eines Objekts in einem Bild zwischen benachbarten Rahmen erzeugt, wobei das Bildverarbeitungsverfahren umfasst:
Erfassen (14) eines Bewegungsvektors (MV) eines Erfassungszielblocks (FB) auf der Grundlage eines Vergleichsergebnisses, das durch Aufteilen eines Rahmens in mehrere Blöcke und Vergleichen eines Bildes jedes Blocks mit einem in einem Suchbereich eines benachbarten Rahmens beinhalteten Bild erhalten wird; und
Erzeugen (15) des Interpolationsbildes auf der Grundlage des erfassten Bewegungsvektors (MV),
wobei bei der Erfassung des Bewegungsvektors (MV)
wahlweise für jeden Block ein erster Vorgang mit einem breiten Suchbereich (SA1) oder zweiter Vorgang mit einem engen Suchbereich (SA2) durchgeführt wird, und
der Suchbereich eines Blocks, bei dem der zweite Vorgang durchgeführt wird, auf der Grundlage des Bewegungsvektors (MV) definiert wird, der bereits für den benachbarten Block erfasst wurde,
wobei, bei der Erfassung des Bewegungsvektors, auf der Grundlage des Vergleichsergebnisses, das bei einer entsprechenden Erfassung erhalten werden kann, wenn ein Bewegungsvektor des Blocks, bei dem der zweite Vorgang durchgeführt wird, erfasst wird, bestimmt wird, ob die Erfassungsgenauigkeit einem Referenzlevel entspricht oder nicht, und der erste Vorgang gewählt wird, um den Bewegungsvektor des Erfassungszielblocks zu erfassen, wenn die Erfassungsgenauigkeit nicht dem Referenzlevel entspricht.

9. Benutzerstation, die Mittel umfasst, die betriebsfähig sind, das Verfahren nach einem der Ansprüche 1 bis 5 durchzuführen.

10. Programmspeichereinrichtung, die durch eine Verarbeitungsvorrichtung lesbar ist, wobei die Einrichtung ein Programm von Anweisungen enthält, das durch die Bearbeitungsvorrichtung ausführbar ist, um das Verfahren nach einem der Ansprüche 1 bis 5 durchzuführen.

## Revendications

1. Procédé de traitement d'images qui génère une image d'interpolation pour une compensation du déplacement d'un objet dans une image entre des trames adjacentes, le procédé de traitement d'images comprenant le fait de:
détecter un vecteur de déplacement (MV) d'un bloc cible de détection (FB) sur la base d'un résultat de comparaison obtenu en divisant une trame en une pluralité de blocs et en comparant une image de chaque bloc à une image comprise dans une gamme de recherche (SA1, SA2) d'une trame adjacente; et -
générer l'image d'interpolation sur la base du vecteur de déplacement (MV) détecté,
où dans la détection du vecteur de déplacement (MV),
un premier processus ayant une large gamme de recherche (SA1) ou un deuxième processus ayant une gamme de recherche étroite (SA2) est exécuté de manière sélective pour chaque bloc, et
où la gamme de recherche d'un bloc, où le deuxième processus est exécuté, est définie sur la base du vecteur de déplacement (MV) qui a déjà été détecté à partir du bloc adjacent,
où dans la détection du vecteur de déplacement, l'on détermine si une précision de détection satisfait ou non un niveau de référence sur la base du résultat de comparaison qui peut être obtenu dans une détection correspondante lorsqu'un vecteur de déplacement du bloc, où le deuxième processus est exécuté, est détecté, et le premier processus est sélectionné pour détecter le vecteur de déplacement du bloc cible de détection lorsque la précision de détection ne satisfait pas le niveau de référence.

2. Procédé de traitement d'image selon la revendication 1, dans lequel dans la détection du vecteur de déplacement (MV), l'on détermine si un bloc cible de détection (FB) correspond ou non à un bloc particulier, et le premier processus est sélectionné pour le bloc cible de détection (FB) si le bloc cible de détection (FB) correspond au bloc particulier.

3. Procédé de traitement d'images selon la revendication 2, comprenant en plus le fait de:
générer une image de différence représentant des différences en valeur de gradation dans des pixels entre des images des trames adjacentes; et
définir le bloc particulier sur la base de l'image de différence.

4. Procédé de traitement d'images selon la revendication 3, dans lequel dans la définition du bloc particulier, le nombre des blocs particuliers est déterminé de telle sorte qu'un traitement à partir de la génération de l'image de différence à la génération de l'image d'interpolation puisse être exécuté dans une limite temporelle prédéterminée.

5. Procédé de traitement d'images selon l'une quelconque des revendications 1 à 4, dans lequel dans la détection du vecteur de déplacement (MV); la gamme de recherche (SA1, SA2) est définie sur la base du vecteur de déplacement qui a déjà été détecté à partir d'un bloc adjacent dans la même trame que celle du bloc cible de détection (FB) lorsque le vecteur de déplacement (MV) est détecté à partir des deuxièmes blocs et des blocs ultérieurs à travers le premier processus.

6. Dispositif de traitement d'images qui génère une image d'interpolation pour une compensation du déplacement d'un objet dans une image entre des trames adjacentes, le dispositif de traitement d'images comprenant:
un circuit de détection (14) qui détecte un vecteur de déplacement (MV) d'un bloc cible de détection (FB) sur la base d'un résultat de comparaison obtenu en divisant une trame en une pluralité de blocs et en comparant une image de chaque bloc à une image comprise dans une gamme de recherche d'une trame adjacente; et
un circuit de génération (15) qui génère l'image d'interpolation sur la base du vecteur de déplacement (MV) détecté par le circuit de détection,
où le circuit de détection (14) utilise de manière sélective un premier processus ayant une large gamme de recherche (SA1) et un deuxième processus ayant une gamme de recherche étroite (SA2) pour chaque bloc comme étant un processus de détection de vecteur de déplacement, et définit la gamme de recherche d'un bloc où le deuxième processus est exécuté sur la base du vecteur de déplacement (MV) qui a déjà été détecté à partir du bloc adjacent,
où dans la détection du vecteur de déplacement, l'on détermine si une précision de détection satisfait ou non un niveau de référence sur la base du résultat de comparaison qui peut être obtenu dans une détection correspondante lorsqu'un vecteur de déplacement du bloc, où le deuxième processus est exécuté, est détecté, et le premier processus est sélectionné pour détecter le vecteur de déplacement du bloc cible de détection lorsque la précision de détection ne satisfait pas le niveau de référence.

7. Appareil d'affichage d'images comprenant:
le dispositif de traitement d'images (10) selon la revendication 6; et
un dispositif électro-optique (20) dans lequel plusieurs composantes électro-optiques ayant une propriété d'émission de lumière ou une propriété de transmission de lumière changée par une énergie électrique reçue sont agencées en forme de feuille,
où l'image d'interpolation est affichée de telle sorte que la propriété d'émission de lumière ou la propriété de transmission de lumière de plusieurs composantes électro-optiques est changée en fonction de l'image d'interpolation générée par le dispositif de traitement d'image (10).

8. Programme qui peut exécuter un procédé de traitement d'images dans un dispositif de traitement d'images qui génère une image d'interpolation pour une compensation du déplacement d'un objet dans une image entre des trames adjacentes, le procédé de traitement d'images comprenant le fait de:
détecter (14) un vecteur de déplacement (MV) d'un bloc cible de détection (FB) sur la base d'un résultat de comparaison obtenu en divisant une trame en une pluralité de blocs et en comparant une image de chaque bloc à une image comprise dans une gamme de recherche d'une trame adjacente; et
générer (15) l'image d'interpolation sur la base du vecteur de déplacement (MV) détecté,
où dans la détection du vecteur de déplacement (MV),
un premier processus ayant une large gamme de recherche (SA1) ou un deuxième processus ayant une gamme de recherche étroite (SA2) est exécuté de manière sélective pour chaque bloc, et
où la gamme de recherche d'un bloc, où le deuxième processus est exécuté, est définie sur la base du vecteur de déplacement (MV) qui a déjà été détecté à partir du bloc adjacent,
où dans la détection du vecteur de déplacement, l'on détermine si une précision de détection satisfait ou non un niveau de référence sur la base du résultat de comparaison qui peut être obtenu dans une détection correspondante lorsqu'un vecteur de déplacement du bloc, où le deuxième processus est exécuté, est détecté, et le premier processus est sélectionné pour détecter le vecteur de déplacement du bloc cible de détection lorsque la précision de détection ne satisfait pas le niveau de référence.

9. Terminal d'utilisateur comprenant un moyen exploitable pour exécuter le procédé de l'une des revendications 1 à 5.

10. Dispositif de stockage de programme lisible par un appareil de traitement, le dispositif mettant en application un programme d'instructions qui peut être exécuté par l'appareil de traitement pour exécuter le procédé de l'une des revendications 1 à 5.
